# FASCICULE DE BREVET EUROPEEN

(11) **EP 4 238 834 B1**
(45) Date de publication et mention de la délivrance du brevet: **29.10.2025**
(21) Numéro de dépôt: 23156724.9
(22) Date de dépôt: 15.02.2023
(51) Int. Cl.: B60R 21/045, B60R 21/34

(54) **ENSEMBLE DE GARNITURE POUR HABITACLE INTÉRIEUR DE VÉHICULE**
VERKLEIDUNGSANORDNUNG FÜR EINEN FAHRZEUGINNENRAUM
TRIM ASSEMBLY FOR VEHICLE INTERIOR

(30) Priorité: 03.03.2022 FR 2201858
(43) Date de publication de la demande: 06.09.2023
(73) Titulaire: SMRC Automotive Holdings Netherlands B.V., 1101 BA Amsterdam (NL)
(72) Inventeur: AUTEM, Laurent, 62860 SAINS-LES-MARQUION (FR); GERMAIN, Christophe, 62223 ANZIN ST AUBIN (FR); HOYEZ, Christophe, 59112 CARNIN (FR)
(74) Mandataire: Ipsilon

(56) Documents cités:
- FR-A1- 3 083 759
- JP-A- 2009 298 293
- JP-A- 2011 105 093
- JP-B2- 5 611 619

## Description

La présente invention se rapporte au domaine des panneaux de garniture pour habitacle de véhicule et plus particulièrement au domaine des panneaux de garniture sécurisés en cas d'impact.

Dans le cadre d'une la collision frontale d'un véhicule avec un piéton ou un cycliste, la carrosserie de la partie avant du véhicule frappe généralement la victime au niveau des jambes. Sous l'effet de la vitesse de déplacement du véhicule, cet impact entraine une bascule de la victime et sa projection contre le capot et le pare-brise.

Pour tenter de limiter l'effet du choc de la victime projetée sur le capot du véhicule, les matériaux utilisés et notamment les tôles de carrosseries présentent une capacité relative de déformation à partir d'un certain seuil de pression. De façon similaire, les pare-brises sont réalisés à partir de verres de sécurité et/ou de verres feuilletés qui présentent comme propriétés de limiter la présence d'angles tranchants ainsi que l'éclatement du pare-brise lors d'un impact, voire éventuellement de restreindre la projection d'éclats vulnérants.

Toutefois, lorsque, compte tenu de la violence de l'impact, la personne renversée traverse un pare-brise, notamment par la partie haute de son corps, cette personne est amenée à entrer en collision avec des éléments disposés à l'intérieur de l'habitacle. Si le capot et le pare-brise du véhicule sont parfois arrangés pour être en mesure d'absorber une partie du choc contre le véhicule de la personne impactée afin de limiter les dommages corporels, tel n'est pas le cas des différentes surfaces situées à l'intérieur des véhicules. Les surfaces positionnées plus particulièrement à proximité du pare-brise sont ainsi susceptibles de blesser gravement la victime d'un accident dont la tête et le haut du corps serait amenés à traverser un pare-brise. De même, lors d'un accident impliquant un véhicule, un passager à l'intérieur du véhicule est susceptible d'avoir une partie de son corps qui percute l'une ou l'autre des surfaces de l'habitacle. Différentes constructions des surfaces de l'habitacle d'un véhicule ont été envisagées pour répondre aux problèmes de leur déformation dans le cadre d'un accident. Toutefois, ces arrangements particuliers des surfaces intérieures de véhicule sont essentiellement configurés pour répondre aux contraintes de protection de passagers au moment de l'ouvertures de volets lors d'un déploiement de coussins d'airbag comme le détaille, par exemple, la publication FR3083759 et n'ont pas vocation à limiter les effets d'un impact corporel contre une surface de l'habitacle. Le document JP 2011 105093 A divulgue un ensemble comprenant un panneau de garniture conformément au préambule de la revendication 1.

La présente invention a pour but de pallier ces inconvénients en proposant une solution qui permet de réduire les risques de blessures liées à l'habitacle pour une victime d'accident impliquant un véhicule.

L'invention se rapporte à un ensemble comprenant les différentes caractéristiques techniques détaillées par l'énoncé de la revendication principale.

L'invention sera mieux comprise, grâce à la description ci-après, qui se rapporte à différents modes de réalisation préférés, donnés à titre d'exemple non limitatif, et expliqués avec référence aux dessins schématiques annexés, dans lesquels :

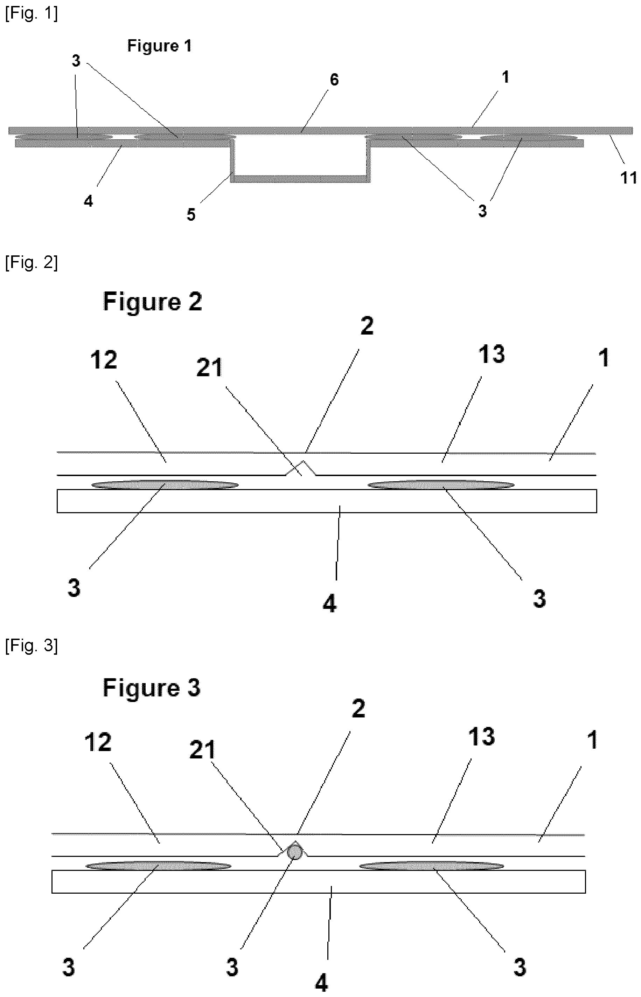

[Fig. 1] représente une illustration schématique d'un premier exemple d'ensemble selon l'invention,
[Fig. 2] représente une illustration schématique d'un second exemple d'ensemble selon l'invention,
[Fig. 3] représente une illustration schématique d'un troisième exemple d'ensemble selon l'invention,

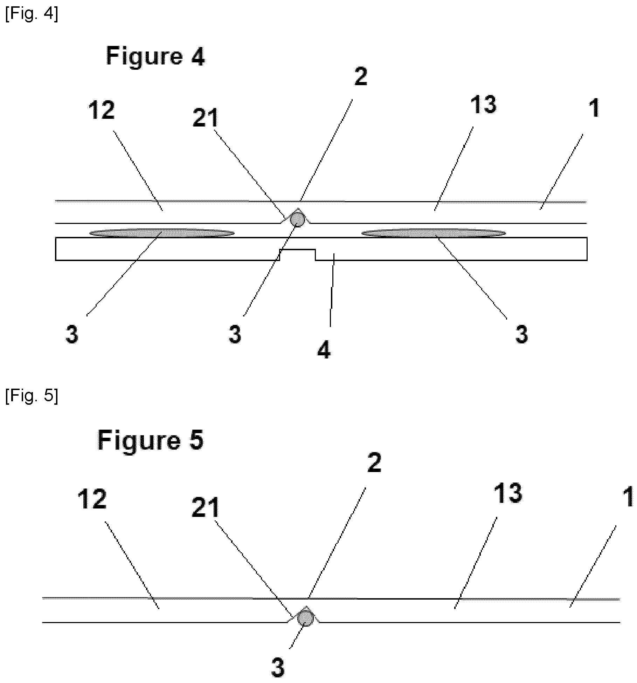

[Fig. 4] représente une illustration schématique d'un quatrième exemple d'ensemble selon l'invention,
[Fig. 5] représente une illustration schématique d'un cinquième exemple d'ensemble qui ne correspond pas à l'invention.

L'invention concerne ainsi un ensemble comprenant un panneau de garniture 1 pour habitacle intérieur de véhicule, l'une des surfaces 11 du panneau de garniture 1 comprenant au moins une ligne d'affaiblissement 2 formée par un évidement 21 dans l'épaisseur de la garniture 1 et disposé en travers d'au moins une partie de la surface du panneau de garniture 1 de façon à définir une ligne de jonction entre deux portions 12, 13 adjacentes du panneau de garniture 1, la ligne d'affaiblissement 2 étant associée à au moins une matière élastique 3 arrangée pour opérer une jonction entre au moins deux portions 12, 13 du panneau de garniture 1, cette matière élastique 3 étant positionnée de part et d'autre de la ligne d'affaiblissement 2 et/ou dans au moins une partie de l'évidement 21 de la ligne d'affaiblissement 2.

Ce panneau de garniture 1 pour habitacle de véhicule intègre ainsi une ou plusieurs lignes d'affaiblissement 2 apte à réaliser une brisure du panneau de garniture 1 sous l'effet d'un effort exercé par un impact. Ces lignes d'affaiblissement 2 disposées dans le panneau de garniture 1 permettent ainsi, d'une part, de privilégier les différentes zones du panneau 1 destinées à rompre et, d'autre part, d'orienter sinon d'imposer la déformation du panneau de garniture 1 brisée. Dans ces conditions, l'impact d'une partie du corps d'une victime contre la surface du panneau de garniture 1 conduit à une brisure prédéterminée du panneau selon un arrangement de différents morceaux entre eux. De même, la prédétermination des brisures apportées par les lignes d'affaiblissement 2 permet d'imposer des formes spécifiques aux contours des différentes portions du panneau 1 de sorte que ceux-ci présentent des angles qui ne soient pas en mesure d'être tranchant ou trop pointu pour réduire les risques de blessure sur une victime d'accident. Par ailleurs, la matière élastique 3 disposée au niveau de la ligne d'affaiblissement 2 de façon à former une jonction entre deux portions 12, 13 juxtaposées du panneau de garniture 1, permet d'assurer un maintien des différentes portions 12, 13 du panneau 1 entre elles après que le panneau de garniture 1 se trouve impacté et rompu. Cette matière élastique 3 permet de maintenir une cohésion des différentes portions 12, 13 du panneau de garniture 1 brisé en évitant son éclatement, de sorte que le risque de projection d'un éclat du panneau 1 susceptible de blesser s'en trouve réduit sinon supprimé.

Selon l'invention, l'évidement 21 dans l'épaisseur du panneau de garniture 1 présente la forme d'un sillon ou d'une rainure ouverte en direction de la surface 11 du panneau de garniture 1 opposée à l'intérieur de l'habitacle. Cette orientation particulière du sillon de l'évidement 21 permet de conserver une homogénéité de surface du côté de l'habitacle et d'éviter que l'apparence de cette surface soit tributaire des lignes d'affaiblissement 2 du panneau de garniture 1.

A titre d'exemple, l'évidement 21 est réalisé, au cours d'une opération de production par moulage du panneau de garniture 1, par le positionnement à l'intérieur du moule d'un arrangement présentant la forme d'une lame. De façon alternative, cet évidement 21 est réalisé, postérieurement à l'opération de production du panneau de garniture 1, par un affaiblissement du panneau 1 en intervenant au niveau d'une de ses faces 11. Cet affaiblissement est susceptible d'être réalisé par intervention d'une lame froide ou d'une lame chaude ou encore par fraisage, voire même par un entaillage au laser également appelé « scoring laser ».

Selon un exemple se rapportant à une variante de construction d'un ensemble selon l'invention, la matière élastique 3 est disposée sur une face du panneau de garniture 1 de façon à traverser l'évidement 21 de la ligne d'affaiblissement 2 en débordant de part et d'autre de la ligne d'affaiblissement 2. Ce débordement de la matière élastique 3 de part et d'autre de l'évidement 21 permet d'augmenter la jonction mécanique des deux portions 12, 13 juxtaposées du panneau 1. Par ces débordements, la surface 11 de prise de la matière élastique 3 sur le panneau de garniture 1 s'en trouve augmentée, de sorte que le risque de rupture, de déchirement ou de séparation entre la matière élastique 3 et la surface 11 du panneau de garniture 1 s'en trouve réduite.

Selon un exemple se rapportant à une autre variante de construction susceptible d'être combinée avec la variante précédemment détaillée, la matière élastique 3 est arrangée sous la forme d'un cordon disposée selon un arrangement en chevrons ou zigzag. Cette distribution de la matière élastique 3 permet d'opérer une jonction mécanique des deux portions 12, 13 juxtaposées du panneau 1 avec un débordement de part et d'autre de l'évidement 21 de façon à optimiser l'emprise de la matière élastique 3 sur le panneau de garniture 1, tout en limitant la quantité de matière élastique 3 disposée le long du sillon formé par l'évidement 21 par rapport à une application en étalement qui recouvre l'ensemble de l'évidement et des bords et surfaces 11 latérales de l'évidement 21.

Selon un exemple se rapportant à une autre variante de construction susceptible d'être combinée avec les variantes précédemment détaillées, la au moins une ligne d'affaiblissement 2 du panneau de garniture 1 présente une profondeur suffisante dans l'épaisseur du panneau de garniture 1 pour entraîner une rupture de la jonction formée par le matériau du panneau de garniture 1 entre les deux portions 12, 13 juxtaposées, la matière élastique 3 présentant une résistance suffisante pour maintenir réunies les deux portions 12, 13 du panneau de garniture 1 en dépit d'une rupture du matériau du panneau de garniture 1. Plus la profondeur de la ligne d'affaiblissement 2 dans l'épaisseur du panneau de garniture 1 est importante et plus la fragilité du panneau de garniture 1 en est accentuée. Préférentiellement, cette profondeur de l'évidement est d'au moins 30% de l'épaisseur du panneau de garniture 1. De façon optimisée, cette profondeur est d'au moins 50% de l'épaisseur du panneau de garniture 1. Idéalement, cette profondeur correspond à au moins 70% de l'épaisseur du panneau de garniture 1. Concernant la matière élastique 3, celle-ci est sélectionnée pour présenter des propriétés de résistance à la traction dans le plan du panneau de garniture 1 qui soient adaptées aux dimensions des portions du panneau de garniture 1 à retenir et en particulier à leurs poids respectifs. De même, cette matière élastique 3 est sélectionnée pour présenter et conserver une souplesse de façon à être apte à la déformation sans empêcher la rupture ou la brisure du panneau de garniture 1 au niveau de la ligne d'affaiblissement 2. Différents exemples de matière élastique 3 présentant cette propriété sont détaillés plus loin. Ainsi, sous l'effet d'un impact, le panneau de garniture 1 se déforme, voire éventuellement se brise, tout en demeurant maintenu par la matière élastique 3 disposée au niveau de la jonction entre deux portions 12, 13 juxtaposées.

Selon un exemple se rapportant à une autre variante de construction susceptible d'être combinée avec les variantes précédemment détaillées, le panneau de garniture 1 est associé par superposition avec au moins un second panneau 4 fixé contre la surface 11 du panneau de garniture 1 qui porte l'évidement 21 de la ligne d'affaiblissement 2. Cette superposition de deux panneaux 1, 4 permet ainsi de renforcer la structure du panneau de garniture 1 pour limiter les risques de brisure non-souhaitée du panneau de garniture 1, notamment lors d'impacts de faible importance qui surviennent dans le cadre d'utilisation normale de l'habitacle intérieur du véhicule. Cette superposition permet également d'apporter une protection du panneau de garniture 1 au niveau de sa surface 11 qui porte un évidement 21 de la ligne d'affaiblissement 2. **Il** convient de relever que selon la nécessité de protéger et/ou de renforcer le panneau de garniture 1, voire même selon les facilités de montage ou de production recherchées, le panneau de garniture 1 est associé par superposition avec plusieurs seconds panneaux 4 respectivement fixés, de façon sensiblement juxtaposée entre eux, contre la surface 11 du panneau de garniture 1 qui porte l'évidement 21 de la ligne d'affaiblissement 2.

Selon un exemple se rapportant à une autre variante de construction spécifique de la variante précédemment détaillée, le matériau du second panneau 4 est identique ou similaire à celui du panneau de garniture 1 ou alternativement présente une souplesse identique ou similaire à celle du panneau de garniture 1. Cet spécificité du second panneau 4 permet ainsi d'opérer un renfort et/ou une protection du panneau de garniture 1 sans altérer sa capacité à se rompre ou se briser en cas de d'impact d'une partie du corps d'une victime contre la surface du panneau de garniture 1.

Selon un exemple se rapportant à une autre variante de construction spécifique mais préférée, le matériau du second panneau 4 présente une souplesse supérieure à celui du panneau de garniture 1. Selon cette variante de construction, la souplesse du second panneau 4 permet de bénéficier d'une protection et/ou d'un renfort du panneau de garniture 1 sans altération de la déformation ou de la rupture du panneau de garniture 1, au niveau de l'évidement 21 de la ligne d'affaiblissement 2, sous l'effet d'un choc accidentel.

Selon un exemple se rapportant à une autre variante de construction spécifique susceptible d'être combinée avec les variantes précédemment détaillées, le au moins un second panneau 4 comprend également au moins une ligne d'affaiblissement 2. Selon cette variante, cette ligne d'affaiblissement 2 est réalisée de façon similaire à celle du panneau de garniture 1, c'est-à-dire par un évidement, par exemple sous la forme d'un sillon ou d'une rainure, dans l'épaisseur du second panneau 4. Selon un exemple se rapportant à une variante spécifique cette variante de construction, les lignes d'affaiblissement 2 respectives du panneau de garniture 1 et du second panneau 4 sont arrangées pour être superposées l'une par rapport à l'autre. Cette superposition des lignes d'affaiblissement 2 respectives des deux panneaux 1, 4 permet d'opérer une brisure ou une rupture conjointe des deux panneaux 1, 4 au niveau de lignes similaires, sinon identiques, de sorte que les deux panneaux 1, 4 réalisent des morceaux de dimensions et de tailles similaires ou identiques.

Selon un exemple se rapportant à une autre variante de construction susceptible d'être combinée avec les variantes précédemment détaillées, la au moins une ligne d'affaiblissement 2 présente un arrangement sensiblement rectiligne sur au moins une portion.

Selon un exemple se rapportant à une autre variante de construction susceptible d'être combinée avec les variantes précédemment détaillées, la au moins une ligne d'affaiblissement 2 présente un arrangement comprenant au moins une courbure.

Selon un exemple se rapportant à une autre variante de construction susceptible d'être combinée avec les variantes précédemment détaillées, le panneau de garniture 1 comprend plusieurs lignes d'affaiblissement 2 arrangées de façon à réaliser un maillage ou un réseau ramifié au moins dans l'épaisseur du panneau de garniture 1.

Selon un exemple se rapportant à une autre variante de construction susceptible d'être combinée avec les variantes précédemment détaillées, la au moins une ligne d'affaiblissement 2 comprend au moins une portion 22 arrangée selon un axe sécant avec au moins un bord du panneau de garniture 1. Selon un exemple correspondant à une variante de construction spécifique de cette variante, la ligne d'affaiblissement 2 est sécante avec un seul bord du panneau de garniture 1. Aussi, la ligne d'affaiblissement 2 présente une course qui réalise la jonction entre, d'une part, un bord du panneau de garniture 1 et, d'autre part, un point particulier du panneau de garniture 1 situé à distance du bord du panneau 1. A titre d'exemple, ce point particulier du panneau de garniture 1 est susceptible de correspondre à un point du panneau 1 à proximité duquel aucune brisure ou rupture du panneau 1 n'est recherchée en cas d'impact. De même, ce point particulier du panneau de garniture 1 est susceptible de correspondre à un point de la course d'une autre ligne d'affaiblissement 2, de sorte que la ligne d'affaiblissement 2 sécante avec un seul bord du panneau de garniture 1 réalise une ramification d'un maillage de lignes d'affaiblissement 2.

Selon un exemple correspondant à une autre variante de construction spécifique de cette variante, la au moins une ligne d'affaiblissement 2 comprend au moins une portion arrangée selon un axe sécant avec deux bords différents du panneau de garniture 1. Selon cette variante de construction, la ligne d'affaiblissement 2 traverse le panneau de garniture 1 entre deux bords opposés ou contigus. Cette ligne d'affaiblissement 2 opère ainsi une division en deux portions du panneau de garniture 1.

Selon un exemple correspondant à une autre variante de construction spécifique de cette variante, la fixation du au moins un second panneau 4 contre la surface 11 du panneau de garniture 1 fait intervenir au moins une matière élastique 3. Cette matière élastique 3 est susceptible de présenter une composition identique ou différente de celle de la matière élastique 3 disposée de part et d'autre de la ligne d'affaiblissement 2 et/ou dans au moins une partie de l'évidement 21 de la ligne d'affaiblissement 2. La matière élastique 3 qui réalise la fixation du second panneau 4 avec le panneau de garniture 1 présente, outre des propriétés d'adhésion, une éventuelle souplesse en cisaillement. Cette souplesse en cisaillement de la matière élastique 3 autorise, lorsque le panneau de garniture 1 présente une rupture, un glissement des portions 12, 13 du panneau de garnitures 1 positionnées de part et d'autre de la ligne d'affaiblissement 2 par rapport à la surface du second panneau 4. Cette souplesse en cisaillement du matériau élastique 3 écarte ainsi le risque d'une rigidification du panneau de garniture 1 brisé lorsque celui-ci demeure fixé au second panneau 4. Ainsi, le panneau de garniture et le second panneau sont fixés par collage.

Selon un exemple se rapportant à une autre variante de construction susceptible d'être combinée avec les variantes précédemment détaillées, au moins une matière élastique 3 est réalisée par un élastomère comprenant une composition à base de silicones mono et/ou bi-composants et/ou à base de polyuréthane, et/ou une colle, voire une colle structurelle. Selon un exemple se rapportant à une variante spécifique de cette variante de construction, la matière élastique 3 présente une composition qui comprend un élastomère constitué de dodécaméthyl- cyclohexasiloxane, et/ou de décaméthyl-cyclopentasiloxane, et/ou de octaméthyl-cyclotétrasiloxane, voire d'un mélange de ces différents éléments. La matière élastique 3 est également susceptible d'être réalisée par un élastomère dont la composition comprend du triméthoxy(méthyl)silane, voire d'un composé de type silane avec des fonctions ou groupes méthoxy et amino, et/ou du (3-Aminopropyl)triméthoxysilane, et/ou du méthanol, et/ou du diméthylbis[(1-oxonéodécyl)oxy]stannane, et/ou du diméthoxydiméthyl-silane, voire également d'un mélange de ces composants. A titre d'exemple, un adhésif ou agent liant susceptible d'être utilisé comme matière élastique 3 est le SILASTIC^{™} Q3-3636 « Fast Cure Catalyst Special Black » ou également le DOWSIL^{™} EA-2626 Base, notamment disponible auprès de la société DOW France SAS.

Selon un exemple se rapportant à une autre variante de construction susceptible d'être combinée avec les variantes précédemment détaillées, au moins une matière élastique 3 présente une stabilité de ses propriétés élastiques dans un intervalle de température compris entre -75° Celsius et 250° Celsius.

Selon un exemple se rapportant à une autre variante de construction susceptible d'être combinée avec les variantes précédemment détaillées, au moins une matière élastique présente une résistance à l'humidité et/ou aux variations de température et/ou à l'oxygène et/ou aux rayons ultra-violet.

Selon un exemple se rapportant à une autre variante de construction susceptible d'être combinée avec les variantes précédemment détaillées, au moins une matière élastique présente, à une température de 23° Celsius, une résistance à l'élongation avant rupture d'au moins 200 % et/ou une résistance à une traction d'au moins 1,9 MPa.

Conformément à l'invention, les deux panneaux 1, 4 superposés intègrent au moins un orifice 5 de canal d'airbag et au moins un volet 6 d'obturation de forme sensiblement complémentaire à au moins une partie de l'orifice 5 de canal d'airbag, le au moins un volet 6 d'obturation étant relié à une partie du bord de l'orifice 5 de canal d'airbag par une charnière 7, la au moins une ligne d'affaiblissement 2 du panneau de garniture 1 ne se superpose sur toute sa longueur ni à au moins un bord de l'orifice 5 de canal d'airbag, ni à un bord du au moins un volet 6 d'obturation. Ainsi, lorsque le panneau de garniture 1 intègre une ou plusieurs lignes d'affaiblissement 2, ces lignes 2 diffèrent de celles susceptibles d'être présentent au niveau de l'orifice 5 du canal d'airbag et/ou du volet 6 d'obturation associé. En effet, dans le cadre du déploiement du coussin d'airbag, le panneau de garniture 1 est susceptible d'intégrer une ou plusieurs lignes d'affaiblissement configurées pour réaliser une déchirure contrôlée au niveau de portions particulières de sa structure et notamment au niveau d'au moins une partie du pourtour du volet 6 d'obturation et/ou de l'orifice 5 du canal d'airbag. Toutefois, si les lignes d'affaiblissement 2 intégrées au panneau de garniture 1 selon l'invention diffèrent de celles qui participent à la fragilisation du panneau de garniture 1 pour le déploiement du coussin d'airbag, ces lignes d'affaiblissement 2 dans le cadre de l'invention sont susceptibles d'être disposées et/ou arrangées, de façon à réaliser un maillage ou un réseau ramifié dans le panneau de garniture 1, en prolongeant ou en rayonnant depuis l'une ou l'autres des lignes de faiblesse qui participent à la fragilisation du panneau de garniture 1 pour le déploiement du coussin d'airbag.

Ainsi, selon un exemple correspondant à une autre variante de construction spécifique de cette variante, la au moins une ligne d'affaiblissement 2 présente un arrangement selon un axe non-parallèle à l'axe d'articulation de la charnière 7 du volet 6 d'obturation.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Ensemble comprenant un panneau de garniture (1) pour habitacle intérieur de véhicule associé par superposition avec au moins un second panneau (4) fixé contre la surface (11) du panneau de garniture (1), l'une des surfaces (11) du panneau de garniture (1) comprenant au moins une ligne d'affaiblissement (2) formée par un évidement (21) dans l'épaisseur de la garniture (1) et disposé en travers d'au moins une partie de la surface du panneau de garniture (1) de façon à définir une ligne de jonction entre deux portions (12, 13) adjacentes du panneau de garniture (1), la ligne d'affaiblissement (2) étant associée à au moins une matière élastique (3) arrangée pour opérer une jonction entre au moins deux portions (12, 13) du panneau de garniture (1), cette matière élastique (3) étant positionnée de part et d'autre de la ligne d'affaiblissement (2) et/ou dans au moins une partie de l'évidement (21) de la ligne d'affaiblissement (2) et en ce que les deux panneaux (1, 4) superposés intégrant au moins un orifice (5) de canal d'airbag et au moins un volet (6) d'obturation de forme sensiblement complémentaire à au moins une partie de l'orifice (5) de canal d'airbag, le au moins un volet 6 d'obturation étant relié à une partie du bord de l'orifice (5) de canal d'airbag par une charnière (7), la au moins une ligne d'affaiblissement (2) du panneau de garniture (1) ne se superpose sur toute sa longueur ni à au moins un bord de l'orifice (5) de canal d'airbag, ni à un bord du au moins un volet (6) d'obturation, **caractérisé en ce que** le au moins un second panneau (4) est fixé contre la surface (11) du panneau de garniture (1) qui porte l'évidement (21) de la ligne d'affaiblissement (2) sous la forme d'un sillon ou d'une rainure ouverte en direction de la surface 11 du panneau de garniture 1 opposée à l'intérieur de l'habitacle.

2. Ensemble selon la revendication 1, **caractérisé en ce que** la matière élastique (3) est disposée sur une face du panneau de garniture (1) de façon à traverser l'évidement (21) de la ligne d'affaiblissement (2) en débordant de part et d'autre de la ligne d'affaiblissement (2).

3. Ensemble selon une des revendications précédentes, **caractérisé en ce que** la matière élastique (3) est arrangée sous la forme d'un cordon disposée selon un arrangement en chevrons ou zigzag.

4. Ensemble selon une des revendications précédentes, **caractérisé en ce que** la au moins une ligne d'affaiblissement (2) du panneau de garniture (1) présente une profondeur suffisante dans l'épaisseur du panneau de garniture (1) pour entraîner une rupture de la jonction formée par le matériau du panneau de garniture (1) entre les deux portions (12, 13) juxtaposées, la matière élastique (3) présentant une résistance suffisante pour maintenir réunies les deux portions (12, 13) du panneau de garniture (1) en dépit d'une rupture du matériau du panneau de garniture (1).

5. Ensemble selon la revendication 5, **caractérisé en ce que** le matériau du second panneau (4) présente une souplesse supérieure à celui du panneau de garniture (1).

6. Ensemble selon une des revendications précédentes, **caractérisé en ce que** le au moins second panneau (4) comprend également au moins une ligne d'affaiblissement (2).

7. Ensemble selon une des revendications précédentes, **caractérisé en ce que** la au moins une ligne d'affaiblissement (2) présente un arrangement sensiblement rectiligne sur au moins une portion.

8. Ensemble selon une des revendications précédentes, **caractérisé en ce que** la au moins une ligne d'affaiblissement (2) comprend au moins une portion (22) arrangée selon un axe sécant avec au moins un bord du panneau de garniture (1).

9. Ensemble selon une des revendications précédentes, **caractérisé en ce que** la au moins une ligne d'affaiblissement (2) comprend au moins une portion arrangée selon un axe sécant avec deux bords différents du panneau de garniture (1).

10. Ensemble selon une des revendications précédentes, caractérisé que la fixation du au moins un second panneau (4) contre la surface (11) du panneau de garniture (1) fait intervenir au moins une matière élastique (3).

11. Ensemble selon une des revendications précédentes, **caractérisé en ce que** au moins une matière élastique (3) est réalisée par un élastomère comprenant une composition à base de silicones mono et/ou bi-composants et/ou à base de polyuréthane, et/ou une colle, voire une colle structurelle.

## Patentansprüche

1. Anordnung, welche eine Verkleidungsplatte (1) für einen Fahrzeuginnenraum umfasst, die durch Übereinanderlegen mit mindestens einer zweiten Platte (4) verbunden ist, die an der Oberfläche (11) der Verkleidungsplatte (1) befestigt ist, wobei eine der Oberflächen (11) der Verkleidungsplatte (1) mindestens eine Schwächungslinie (2) umfasst, die durch eine Vertiefung (21) in der Dicke der Verkleidung (1) gebildet wird und quer zu mindestens einem Teil der Oberfläche der Verkleidungsplatte (1) angeordnet ist, so dass sie eine Verbindungslinie zwischen zwei benachbarten Abschnitten (12, 13) der Verkleidungsplatte (1) definiert,
wobei der Schwächungslinie (2) mindestens ein elastisches Material (3) zugeordnet ist, das dafür ausgelegt ist, eine Verbindung zwischen mindestens zwei Abschnitten (12, 13) der Verkleidungsplatte (1) zu bewirken, wobei dieses elastische Material (3) beiderseits der Schwächungslinie (2) und/oder in wenigstens einem Teil der Vertiefung (21) der Schwächungslinie (2) positioniert ist, und wobei in die zwei übereinander gelegten Platten (1, 4) mindestens eine Airbagkanal-Öffnung (5) und mindestens eine Verschlussklappe (6) von einer Form, die im Wesentlichen komplementär zu wenigstens einem Teil der Airbagkanal-Öffnung (5) ist, integriert sind, wobei die mindestens eine Verschlussklappe (6) mit einem Teil des Randes der Airbagkanal-Öffnung (5) durch ein Scharnier (7) verbunden ist, die mindestens eine Schwächungslinie (2) der Verkleidungsplatte (1) auf ihrer gesamten Länge weder mindestens einen Rand der Airbagkanal-Öffnung (5) noch einen Rand der mindestens einen Verschlussklappe (6) überlagert, **dadurch gekennzeichnet, dass** die mindestens eine zweite Platte (4) an der Oberfläche (11) der Verkleidungsplatte (1) befestigt ist, welche die Vertiefung (21) der Schwächungslinie (2) in der Form einer Furche oder einer Nut trägt, die in Richtung der Oberfläche (11) der Verkleidungsplatte (1) offen ist, die dem Inneren des Innenraumes gegenüberliegt.

2. Anordnung nach Anspruch 1, **dadurch gekennzeichnet, dass** das elastische Material (3) auf einer Seite der Verkleidungsplatte (1) so angeordnet ist, dass es die Vertiefung (21) der Schwächungslinie (2) durchquert und dabei beiderseits der Schwächungslinie (2) übersteht.

3. Anordnung nach einem der vorhergehenden Ansprüche, **dadurch gekennzeichnet, dass** das elastische Material (3) in der Form einer Schnur ausgebildet ist, die in einer fischgrätenförmigen oder zickzackförmigen Anordnung angeordnet ist.

4. Anordnung nach einem der vorhergehenden Ansprüche, **dadurch gekennzeichnet, dass** die mindestens eine Schwächungslinie (2) der Verkleidungsplatte (1) eine ausreichende Tiefe in der Dicke der Verkleidungsplatte (1) aufweist, um einen Bruch der von dem Material der Verkleidungsplatte (1) gebildeten Verbindung zwischen den zwei nebeneinanderliegenden Abschnitten (12, 13) zu verursachen, wobei das elastische Material (3) einen ausreichenden Widerstand aufweist, um die zwei Abschnitte (12, 13) der Verkleidungsplatte (1) trotz eines Bruchs des Materials der Verkleidungsplatte (1) zusammenzuhalten.

5. Anordnung nach Anspruch 5, **dadurch gekennzeichnet, dass** das Material der zweiten Platte (4) eine Flexibilität aufweist, die größer als diejenige der Verkleidungsplatte (1) ist.

6. Anordnung nach einem der vorhergehenden Ansprüche, **dadurch gekennzeichnet, dass** die mindestens eine zweite Platte (4) ebenfalls mindestens eine Schwächungslinie (2) umfasst.

7. Anordnung nach einem der vorhergehenden Ansprüche, **dadurch gekennzeichnet, dass** die mindestens eine Schwächungslinie (2) auf wenigstens einem Abschnitt eine im Wesentlichen gerade Anordnung aufweist.

8. Anordnung nach einem der vorhergehenden Ansprüche, **dadurch gekennzeichnet, dass** die mindestens eine Schwächungslinie (2) mindestens einen Abschnitt (22) umfasst, der entlang einer Achse angeordnet ist, die mindestens einen Rand der Verkleidungsplatte (1) schneidet.

9. Anordnung nach einem der vorhergehenden Ansprüche, **dadurch gekennzeichnet, dass** die mindestens eine Schwächungslinie (2) mindestens einen Abschnitt umfasst, der entlang einer Achse angeordnet ist, die zwei verschiedene Ränder der Verkleidungsplatte (1) schneidet.

10. Anordnung nach einem der vorhergehenden Ansprüche, **dadurch gekennzeichnet, dass** die Befestigung der mindestens einen zweiten Platte (4) an der Oberfläche (11) der Verkleidungsplatte (1) die Verwendung mindestens eines elastischen Materials (3) umfasst.

11. Anordnung nach einem der vorhergehenden Ansprüche, **dadurch gekennzeichnet, dass** mindestens ein elastisches Material (3) aus einem Elastomer hergestellt ist, das eine Zusammensetzung auf der Basis von ein- und/oder zweikomponentigen Silikonen und/oder auf der Basis von Polyurethan und/oder einen Klebstoff, etwa einen Strukturklebstoff, umfasst.

## Claims

1. Assembly comprising a trim panel (1) intended for an interior passenger compartment of a vehicle and associated through superposition with at least one second panel (4) fastened against the surface (11) of the trim panel (1), one of the surfaces (11) of the trim panel (1) comprising
at least one line of weakness (2) formed by a recess (21) in the thickness of the trim (1) and provided across at least part of the surface of the trim panel (1) so as to define a joining line between two adjacent portions (12, 13) of the trim panel (1),
the line of weakness (2) being associated with at least one elastic material (3) arranged so as to join at least two portions (12, 13) of the trim panel (1), this elastic material (3) being positioned on either side of the line of weakness (2) and/or in at least part of the recess (21) of the line of weakness (2) and in that the two superposed panels (1, 4) include at least one airbag channel orifice (5) and at least one shut-off flap (6) with a substantially complementary shape to at least part of the airbag channel orifice (5), the at least one shut-off flap (6) being connected to part of the edge of the airbag channel orifice (5) by a hinge (7), the at least one line of weakness (2) of the trim panel (1) does not overlap over its entire length with at least one edge of the airbag channel orifice (5) or with an edge of the at least one shut-off flap (6), **characterized in that** the at least one second panel (4) is fastened against the surface (11) of the trim panel (1) that contains the recess (21) of the line of weakness (2) in the form of a slot or a groove that is open towards the surface (11) of the trim panel (1) facing away from the interior of the passenger compartment.

2. Assembly according to Claim 1, **characterized in that** the elastic material (3) is provided on a face of the trim panel (1) so as to pass through the recess (21) of the line of weakness (2) and protrude on either side of the line of weakness (2).

3. Assembly according to either of the preceding claims, **characterized in that** the elastic material (3) is arranged in the form of a cord provided in a herringbone or zigzag arrangement.

4. Assembly according to one of the preceding claims, **characterized in that** the at least one line of weakness (2) of the trim panel (1) has a sufficient depth in the thickness of the trim panel (1) to cause the join formed by the material of the trim panel (1) between the two juxtaposed portions (12, 13) to break, the elastic material (3) having sufficient strength to hold the two portions (12, 13) of the trim panel (1) together despite the material of the trim panel (1) having broken.

5. Assembly according to Claim 5, **characterized in that** the material of the second panel (4) has a greater flexibility than that of the trim panel (1).

6. Assembly according to one of the preceding claims, **characterized in that** the at least one second panel (4) also comprises at least one line of weakness (2).

7. Assembly according to one of the preceding claims, **characterized in that** the at least one line of weakness (2) has a substantially rectilinear arrangement over at least one portion.

8. Assembly according to one of the preceding claims, **characterized in that** the at least one line of weakness (2) comprises at least one portion (22) arranged along an axis that intersects with at least one edge of the trim panel (1).

9. Assembly according to one of the preceding claims, **characterized in that** the at least one line of weakness (2) comprises at least one portion arranged along an axis that intersects with two different edges of the trim panel (1).

10. Assembly according to one of the preceding claims, **characterized in that** the fastening of the at least one second panel (4) against the surface (11) of the trim panel (1) involves at least one elastic material (3).

11. Assembly according to one of the preceding claims, **characterized in that** at least one elastic material (3) is made of an elastomer comprising a composition based on one-component and/or two-component silicones and/or based on polyurethane, and/or an adhesive, or even a structural adhesive.
